Europäisches Patentamt

European Patent Office

Office européen des brevets

(19)

(11) Publication number: **0 171 823**
**A1**

# (12) EUROPEAN PATENT APPLICATION

(21) Application number: **85200812.7**

(22) Date of filing: **21.05.85**

(51) Int. Cl.⁴: **H 01 B 3/30**
**C 08 K 3/22, C 08 L 79/08**
**C 08 L 77/00**

(30) Priority: **18.06.84 IT 2145784**

(43) Date of publication of application:
**19.02.86 Bulletin 86/8**

(84) Designated Contracting States:
**AT BE CH DE FR GB LI LU NL SE**

(71) Applicant: **SAFI-CONEL S.p.A.**
**via Del Lavoro, 13**
**I-20032 Cormano Fraz. Ospitaletto Milanese (Milan)(IT)**

(72) Inventor: **Ghisellini, Sergio**
**Via Rossini 1 I-20032 Cormano**
**Fraz. Ospitaletto Milanese(IT)**

(74) Representative: **Giambrocono, Alfonso, Dr. Ing. et al,**
**Ing. A. Giambrocono & C. S.r.l. Via Rosolino Pilo 19/B**
**I-20129 Milano(IT)**

(54) Insulating layer of improved characteristics for use as a dielectric for metal electrical conductors, and the insulated electrical conductor thus obtained.

(57) The insulating layer for use as a dielectric for metal electrical conductors is of the type constituted by one or more successive depositions of layers on the conductor, and is essentially characterised in that the combination of said depositions is constituted by a mixture of at least one synthetic resin containing nitrogen with an inorganic filler, in such quantities as to obtain for the total insulating layer a weight ratio of resin to filler which varies from 99%:1% to 88%:12%.

More particularly, in the insulating layer on the conductor, the proportion by weight of the total synthetic resins containing nitrogen, excluding the solvents, and the proportion by weight of the inorganic filler are 88% – 99% and 12% – 1% respectively, and preferably 92% – 98% and 8% – 2% respectively.

Fig. 1

Insulating layer of improved characteristics for use as
a dielectric for metal electrical conductors, and the
insulated electrical conductor thus obtained

This industrial invention patent relates to an insulating
layer of improved characteristics for use as a dielectric
for metal electrical conductors. The patent also relates
to the insulated electrical conductor obtained by coating
with said insulating layer.

Copper and aluminium conductors used for forming the stator
or rotor windings of electric machines and for implementing
the passage of current for any electrical apparatus or
equipment are insulated from each other and from earth by
a thin layer of insulating material distributed totally
around the conductor by suitable, well tried methods
normally known as enamelling or coating, extrusion, electro
deposition and others. The finished product is the insulated conductor.

Forming the insulating layer by the enamelling process is
currently done by using synthetic resins dissolved or
emulsified in solvents and diluents, the purpose of which
is to make said rezins liquid in order to apply them to
the conductors under the best possible applicational condi
tions, and which are then evaporated during the various
stages of the process.

The synthetic resins used for the enamelling process
contain considerable percentages of nitrogen in their
chain. Poly-imide, poly-amide-imide, polyester-imide, polyester-amide-imide and polyamide resins are particularly suitable. For the function which they are required to perform, these resins must be completely free from impurities, which are considered damaging because of the fall-off in the dielectric characteristics of the insulated conductor.

In the electrical conductor field it is known to use organic dyes soluble in the utilised solvents in order to enable the user to distinguish between the various conductors during their application, and thus allow the various connections to be correctly made.

In the field of paints for walls and metal surfaces, it is known to use dyes in the form of inorganic pigments, for example zinc oxide, iron oxide, titanium dioxide, prussian blue and others, but said pigments, when used in the proportions normally used for colouring purposes, worsen the dielectric characteristics of the conductor insulating layer and for this reason are not used as dyes by suppliers and users of enamelling varnishes for conductors for electrotechnical and electromechanical use.

In recent years, the constructional engineering aspects of machines and electrical apparatus have undergone considerable development, and in addition the fierce commercial competition requires that rejects and scrap be kept to a minimum. Considerable research is therefore being carried out directed towards improving not only the normal dielectric characteristics of the insulating layer, but also its resistance to mechanical abrasion and the surface

slidability of the conductor, in order to reduce manufacturing rejects and to obtain an improved electrical field distribution. A greater resistance to solvents, in particular to refrigerator Freon, is also essential in order to provide a longer life for the final products in addition obviously to a reduction in rejects.

An object of the present invention is to provide an insulating layer for metal electrical conductors, and the metal electrical conductors coated with said insulating layer, and which in particular results in an increase in resistance to surface mechanical abrasion both when unconditioned with Freon and after conditioning, an increase in thermal stresses under pressure (thermoplasticity), and an increase in slidability and reduction in the coefficient of friction, in order to provide better insertability of the insulated conductor into the rotor or stator cavity of an electric machine.

These and further objects of the invention will be apparent to experts of the art from a reading of the description and claims given hereinafter.

Contrasting with the technical preconceptions of the experts of the art, the applicant carried out experiments using an inorganic filler in suitable proportions in a mixture of solutions of synthetic resins normally used for enamelling electrical conductors, the inorganic filler being of the type normally used as pigments for colouring paints and enamels in fields technologically different from the field of electrical conductor enamelling, and thereby obtained insulating layers possessing the required high resistance to surface mechanical abrasion both when unconditioned with Freon and after conditioning, together with an increase in thermal stresses under pressure (thermoplasticity) and an increase in the slidability together with a reduction in the coefficient of friction, in addition to obviously possessing the normal insulating layer dielectric characteristics.

The insulating layer for use as a dielectric for metal electrical conductors is of the type constituted by one or more successive depositions of layer on the conductor, and is essentially characterised in that the combination of said deposition is constituted by a mixture of at least one synthetic resin containing nitrogen with an inorganic filler, in such quantities as to obtain for the total insulating layer a weight ratio of resin to filler which varies from 99%:1% to 88%:12%.

More particularly, in the insulating layer on the conductor, the proportion by weight of the total synthetic resins containing nitrogen, excluding the solvents, and the proportion by weight of the inorganic filler are 88%-99% and 12%-1% respectively, and preferably 92%-98% and 8%-2% respectively.

The examples given hereinafter will better clarify the inventive concept.

EXAMPLE 1

Using conventional methods, rutile titanium dioxide is added to a solution consisting of a 60/40 cresol-aromatic hydrocarbon mixture and a polyester-imide resin and having the following characteristics:

dry residue            38 ± 1% by weight

viscosity at 25°C      1800 m.Pa.s.

in the proportions of 98.8% of solution and 1.2% of titanium dioxide. The mixture thus obtained is used for enamelling a copper conductor of diameter 1.06 mm by means of the usual enamelling plants and processes, to obtain an outer diameter of 1.14 ± 0.02 mm.

A sample of the conductor insulated in this manner and a sample of a conductor of the same diameter enamelled with the same mixture but without the addition of the rutile titanium dioxide were subjected to a bidirectional abrasion resistance test (A) before treatment in Freon, to a bidirectional abrasion resistance test (B) after treatment in Freon R 22, to a thermoplasticity test (C) and to a slidability test for determining the coefficient of static friction (D) and for determining the insertability (E) into the cavity of a rotor or stator of an electric machine. The methods for carrying out said tests are described hereinafter and the results are given in the comparative table.

EXAMPLE 2

Using conventional methods, rutile titanium dioxide was added to a solution consisting of an 80/20 Nmp-xylol mixture and a polyamide-imide resin and having the following characteristics:

dry residue            30 ± 1% by weight

- 6 -                           0171823

viscosity at 25°C        1600 m.Pa.s.

in the proportions of 94.5% of solution and 5.5% of titanium dioxide. The mixture thus obtained was used by means of the usual enamelling plants and processes for enamelling a copper conductor of initial diameter 1.06 mm which had been previously insulated to a diameter of 1.12± 0.02 mm with a layer of insulation based on polyester-imide resins to obtain a total outer diameter of 1.14 ± 0.02 mm.

A sample of the conductor insulated in this manner and a sample of a conductor of the same diameter which had firstly been insulated with an equal layer of insulation based on polyester-imide resins and then enamelled with an equal mixture but without the addition of the titanium dioxide to an equal total outer diameter of 1.14 ± 0.02 mm were subjected to the tests (A) - (E) of Example 1, and the results are shown in the following comparative table.

COMPARATIVE TABLE

| Test | Example 1 | Comparison with Example 1 | Example 2 | Comparison with Example 2 |
|------|-----------|---------------------------|-----------|---------------------------|
| A scraps | 60 - 120 | 40 - 80 | 150 - 250 | 100 - 180 |
| B scraps | 20 - 40 | 10 - 20 | 60 - 100 | 40 - 60 |
| C °C | 360 | 350 | 370 | 360 |
| D | 4 - 5 | 5 - 6 | 4 - 5 | 5 - 6 |
| E | good | normal | excellent | good |

- The method for measuring the bidirectional abrasion resistance (A) is defined by Italian CEI Standards 55-1 part 37, paragraph 3.2.04 and by the international IEC Standards publication 251-1 paragraph 11.

- The degree of goodness is evaluated in terms of the largeness of the number of scraps.

- The method for measuring the bidirectional abrasion resistance (B) is the same as method (A), but with the difference that the samples are firstly conditioned by conventional Freon treatment. An example of this treatment is as follows.

Conditioning with Freon R 22:

a) an enamelled sample of round wire of length 170 mm is cleaned with a clean, dry cloth and is slightly stretched (less than 1%) in order to eliminate any slight non-linear deformations;

b) one end of the enamelled sample is bared and the other end is bent at 90°;

c) the sample is placed in an oven at 150°C;

d) the sample is removed from the oven after 15 minutes and allowed to cool to ambient temperature, then it is placed in a bottle-shaped container (standard in the refrigerator field) which is then closed in an air-tight manner;

e) the container is cooled to 0°C and a vacuum of 200 microns of mercury is applied;

f) 57-113 g of Freon R 22 refrigerant gas are fed in;

g) the container is heated for 72 hours at 40°C;

h) the bottle is cooled to -50°C until the manometer inserted into a suitable connector on the container shows no pressure;

i) the container is opened and the sample subjected to the test in accordance with the aforesaid method (A).

- The method for testing thermoplasticity (C) is defined by Italian CEI Standards 55-1 part 37, paragraph 3.3.02, and by the international IEC Standards publication 251-1 paragraph 10.1 and 10.2 and by the USA Standards MW 1000 part 3, paragraph 50.1.1.

- The slidability tests are carried out with samples of enamelled conductors in accordance with the present invention and with samples of conventionally enamelled conductors.

For the coefficient of friction test (D), the known appa ratus shown in the figures of the single accompanying drawing is used, in which:

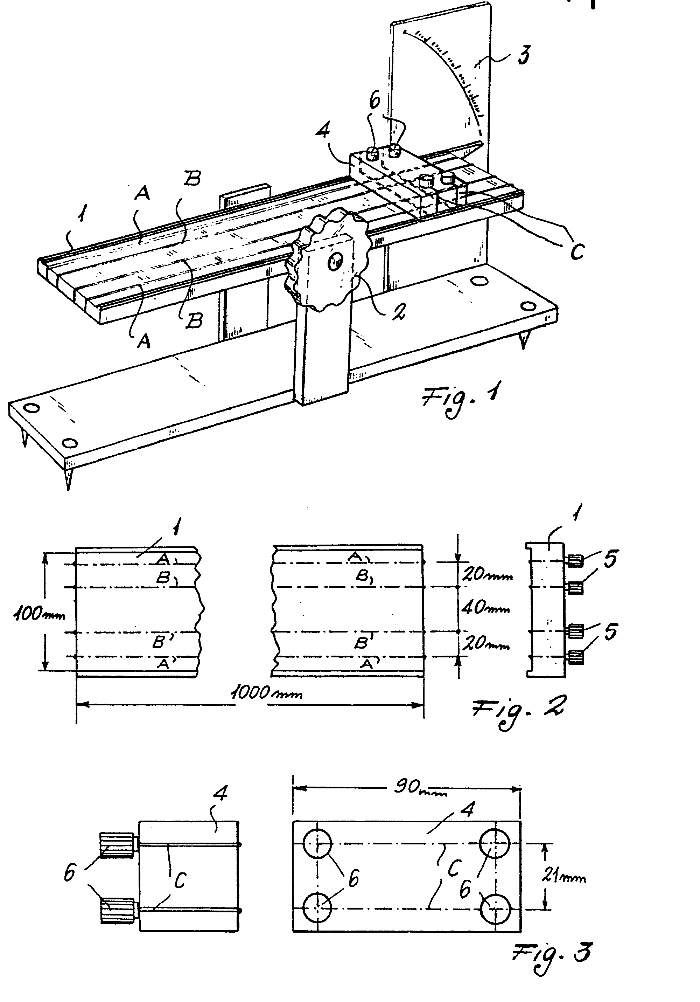

Figure 1 is a perspective view of the complete apparatus;

Figure 2 is a plan and side view of the inclinable table; and

Figure 3 is a plan and side view of the slider.

With reference to the figures, the apparatus comprises an inclinable table 1 of dimensions 100 x 1000 mm provided with a micrometric knob 2 for adjusting the inclination of said table, and with a reading scale 3 which indicates the value $100 \times \tan \alpha$, where $\alpha$ is the angle made by said table to the horizontal, and further provided with a slider 4 of dimensions 21 x 90 mm and of weight 100 or 200 g (for nominal enamelled conductor diameters < or $\geq$ 0.10 mm).

In order to carry out the test for determining the static friction coefficient (D), the surface of the inclinable table 1 and the lower part of the slider 4 must be cleaned with a volatile solvent, for example cyclohexane. For enamelled conductors having a nominal diameter exceeding 0.1 mm, two portions A of the conductor under test are mounted, whereas in the case of a nominal diameter of between 0.03 and 0.1 mm, a further two portions B are also mounted. The portions A and B must be properly taut between the clamps 5. As shown in the figures, a further two portions C of the same conductor are mounted on the slider 4 and are kept properly taut by means of the clamps 6. During the mounting of the various portions A, B e C, they must not be touched by hand on the parts which are to come into contact during the test.

In order to determine the static friction coefficient, the slider 4 is rested delicately and properly centered on the inclinable surface 1 at the end comprising the graduated scale, after having set this latter rigorously horizontal (possibly by using a suitable level) in such a manner that the conductors C become disposed transversely on the conductors A and B. By operating the knob 2, the table 1 is inclined until the slider 4 starts to move, ie begins to slide, and at this moment the value 100 x tan α is read on the scale 3. The described operation must be repeated at least five different points on the table 1, each time reading the value of 100 x tan α which indicates the static friction coefficient. The conditions of the conductor on which the test has been carried out must always be indicated, ie whether in its natural state as withdrawn from the reel, or whether cleaned with a determined cloth. The static friction coefficient is the mean value of the five values found, calculated as 100 x tan $\alpha$.

With regard to the test of insertability (E) into a cavity, there is no standard coded laboratory test for this and it was therefore necessary to take samples of some thousands of kg of insulated conductors and experiment with them on winding machines of different design and construction. The results demonstrated that the insertability of the two conductors of Examples 1 and 2 into a cavity was 10-15% better than the respective comparison samples (see Table).

Claims:

1. An insulating layer for use as a dielectric for metal electrical conductors of the type constituted by one or more successive deposition of layers on the conductor, characterised in that the combination of said depositions is constituted by a mixture of at least one synthetic resins containing nitrogen with an inorganic filler, in such quantities as to obtain for the total insulating layer a weight ratio of resin to filler which varies from 99%:1% to 88%:12%.

2. An insulating layer as claimed in claim 1, characterised in that in the insulating layer on the conductor, the proportion by weight of the synthetic resins containing nitrogen, excluding the solvents, and the proportion by weight of the inorganic filler are 88% - 99% and 12% - 1% respectively, and preferably 92% - 98% and 8% - 2% respectively.

3. An insulating layer as claimed in the preceding claims, characterised in that said at least one synthetic resin containing nitrogen is constituted by poly-imide, poly-amide-imide, polyester-imide, polyester amide-imide or polyamide resins, or mixtures thereof.

4. An insulating layer as claimed in the preceding claims, characterised in that said inorganic filler is titanium dioxide, and advantageously rutile titanium dioxide.

5. A metal electrical conductor insulated externally by the insulating layer claimed in claims 1 to 4.

All substantially as described, claimed and for the objects specified.

0171823

Fig. 1

100mm

1000mm

20mm
40mm
20mm

Fig. 2

90mm

21mm

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | FR-A-1 597 488   (FIRMA H. WIEDERHOLD) <br> * Claims * | 1-5 | H 01 B      3/30 <br> C 08 K      3/22 <br> C 08 L    79/08 <br> C 08 L    77/00 |
| X | FR-A-2 247 507   (BASF) <br> * Page 8, lines 22-26; claims 1,9 * | 1-5 | |
| X | US-A-3 676 383   (L.C. SCALA et al.) <br> * Claims * | 1-5 | |
| X | FR-A-1 597 537   (FIRMA H. WIEDERHOLD) <br> * Claims * | 1-5 | |
| X | US-A-4 331 970   (A.J. YERMAN) <br> * Abstract; claims * | 1-5 | **TECHNICAL FIELDS SEARCHED (Int Cl.4)** <br><br> H 01 B <br> C 08 L <br> C 08 K |
| X | PATENTS ABSTRACTS OF JAPAN, vol. 7, no. 171 (C-178), 28-06-1983; & JP - A - 58 79 066 (HITACHI DENSEN K.K.) 12-05-1983 <br> * Abstract * | 1 | |
| A | EP-A-0 033 224   (SUMITOMO ELECTRIC INDUSTRIES) | | |

The present search report has been drawn up for all claims

| Place of search | Date of completion of the search | Examiner |
|---|---|---|
| THE HAGUE | 02-10-1985 | STIENON P.M.E. |